# EUROPEAN PATENT APPLICATION

(11) **EP 4 556 095 A1**
(43) Date of publication of application: **21.05.2025**
(21) Application number: 24778314.5
(22) Date of filing: 01.04.2024
(51) Int. Cl.: B01D 53/00, B01D 53/06, B01D 3/14

(54) **METHOD AND SYSTEM FOR RECOVERING NMP IN LITHIUM BATTERY PRODUCTION**

(30) Priority: 30.03.2023 CN 202310331967
(71) Applicant: SVOLT Energy Technology Co., Ltd., Changzhou, Jiangsu 213200 (CN)
(72) Inventor: KANG, Xiaobing, hangzhou, Jiangsu 213200 (CN)
(74) Representative: Groth & Co. KB
(86) International application number: PCT/CN2024/085365
(87) International publication number: WO 2024/199529

(57) **Abstract**

A method and system for recovering NMP in lithium battery production. The method for recovering NMP in lithium battery production is characterized by comprising the following steps: S1, acquiring NMP waste gas discharged from a coating machine, and subjecting the NMP waste gas to a multi-stage condensation treatment to obtain a first-stage NMP waste liquid and a first-stage NMP gas; S2, conveying the first-stage NMP gas to a zeolite runner for an adsorption and desorption treatment so as to obtain a desorbed second-stage NMP gas, then absorbing NMP in the second-stage NMP gas by means of an absorption liquid to obtain a second-stage NMP waste liquid and a waste gas that meets standards, and discharging the waste gas that meets standards; S3, mixing the first-stage NMP waste liquid with the second-stage NMP waste liquid to obtain an NMP recovered liquid, then subjecting the NMP recovered liquid to a multi-stage dehydration treatment to remove dehydrated light components, and extracting dehydrated heavy components; S4, rectifying the dehydrated heavy components to remove rectified heavy components, extracting rectified light components, and acquiring an NMP finished product liquid via the rectified light components, wherein first-stage NMP backflow gas obtained after the first-stage NMP gas is adsorbed by the zeolite runner and second-stage NMP backflow gas obtained after the dehydrated light components and the rectified light components are condensed flow back to the coating machine after both undergo heat exchange with the NMP waste gas, and the cooled NMP waste gas is then subjected to a multi-stage condensation treatment. The method for recovering NMP in lithium battery production can effectively purify NMP waste gas and adequately recover and use heat in the NMP waste gas.

## Description

The present application claims priority to Chinese Patent Application No. 202310331967.7, entitled "METHOD AND SYSTEM FOR RECOVERING NMP IN LITHIUM BATTERY PRODUCTION", and filed to China National Intellectual Property Administration on March 30, 2023, the entire contents of which are incorporated herein by reference.

### TECHNICAL FIELD

The present disclosure relates to the technical field of lithium battery production, and in particular to a method for recovering NMP in lithium battery production. The present disclosure further relates to a recovery system for implementing the method for recovering NMP in lithium battery production.

### BACKGROUND

In the production process of lithium ion batteries, pole piece coating is an essential process. During the coating process, a large amount of NMP gas will be volatilized. Its chemical name is N-methylpyrrolidone, the chemical formula is CH9NO, and the molecular weight is 99.1. Due to cost considerations, in lithium battery production, the NMP waste gas generated by coating is generally recovered and purified to form NMP finished product liquid that can be directly used in coating operations.

However, in the existing lithium-ion battery manufacturing, the recovery rate of NMP in NMP waste gas is low, the purity of the recovered NMP finished product liquid is about 80%, and the heat recovery efficiency of NMP waste gas is further low, resulting in problems of heat energy waste and high energy consumption, which in turn leads to increased manufacturing costs and difficulty in meeting environmental protection requirements.

### SUMMARY OF THE INVENTION

In view of this, the present disclosure aims to propose a method for recovering NMP in lithium battery production, so as to recover and purify NMP waste gas while improving the heat recovery rate.

To achieve the above objectives, the technical solution of the present disclosure is implemented as follows:
A method for recovering NMP in lithium battery production comprises the following steps:
S1, acquiring NMP waste gas discharged from a coating machine, and subjecting the NMP waste gas to a multi-stage condensation treatment to obtain a first-stage NMP waste liquid and a first-stage NMP gas;
S2, conveying the first-stage NMP gas to a zeolite runner for an adsorption and desorption treatment so as to obtain a desorbed second-stage NMP gas, then absorbing NMP in the second-stage NMP gas by means of an absorption liquid to obtain a second-stage NMP waste liquid and a waste gas that meets standards, and discharging the waste gas that meets standards;
S3, mixing the first-stage NMP waste liquid with the second-stage NMP waste liquid to obtain an NMP recovered liquid, then subjecting the NMP recovered liquid to a multi-stage dehydration treatment to remove dehydrated light components, and extracting dehydrated heavy components; and
S4, rectifying the dehydrated heavy components to remove rectified heavy components, extracting rectified light components, and acquiring an NMP finished product liquid via the rectified light components,
wherein first-stage NMP backflow gas obtained after the first-stage NMP gas is adsorbed by the zeolite runner and second-stage NMP backflow gas obtained after the dehydrated light components and the rectified light components are condensed flow back to the coating machine after both undergo heat exchange with the NMP waste gas, and the cooled NMP waste gas is then subjected to a multi-stage condensation treatment.

Further, the multi-stage condensation treatment in S1 comprises a first-stage condensation treatment and a second-stage condensation treatment; the cooling medium for the first-stage condensation treatment and the second-stage condensation treatment is cooling water and/or chilled water.

Further, the method further comprises the following steps: mixing the desorbed second-stage NMP gas obtained in S2 with the NMP waste gas in S1 to obtain a mixed gas, and the mixed gas undergoing the multi-stage condensation treatment and the zeolite runner treatment before being absorbed by the absorption liquid.

Further, the method further comprises the following steps: obtaining a third-stage NMP waste liquid formed by first-stage condensation of the NMP waste gas after both the first-stage NMP backflow gas and the second-stage NMP backflow gas are heat-exchanged with the NMP waste gas, and merging the third-stage NMP waste liquid into the NMP recovered liquid.

Further, the absorption liquid comprises at least one of the NMP recovered liquid and pure water.

Further, the absorption liquid comprises a first-stage absorption liquid and a second-stage absorption liquid, the NMP concentration in the first-stage absorption liquid is between 1% and 5%, and the NMP concentration in the second-stage absorption liquid is between 30% and 80%.

Further, in S3, the multi-stage dehydration treatment comprises a first-stage dehydration treatment and a second-stage dehydration treatment; after the NMP recovered liquid is subjected to the first-stage dehydration treatment, the first-stage light component is removed and the first-stage heavy component is produced, subsequently, the first-stage heavy component is subjected to the second-stage dehydration treatment and the second-stage light component is removed to produce the dehydrated heavy component, and the first-stage light component and the second-stage light component constitute the dehydrated light component.

Further, the first-stage light component is subjected to a condensation treatment to remove waste water and produce first-stage light component gas, and the second-stage light component is subjected to a condensation treatment to extract second-stage light component liquid and second-stage light component gas containing NMP respectively; the second-stage light component liquid is transported for rectifying, and the second-stage NMP backflow gas comprises the first-stage light component gas and the second-stage light component gas.

Further, when the second-stage NMP backflow gas is obtained after condensation treatment of the dehydrated light components and the rectified light components, the method further comprises the following steps: the rectified light component is first condensed and then heat-exchanged with the NMP recovered liquid to obtain the rectified light component gas and the NMP finished product liquid, wherein the second-stage NMP backflow gas comprises the rectified light component gas.

Further, the NMP concentration in the NMP recovered liquid subjected to the multi-stage dehydration treatment is between 30% and 80%.

Further, the NMP concentration in the first-stage NMP gas is between 150 and 200 ppm; and/or, the NMP content of the waste gas that meets the standards is not higher than 25 mg/m³, and the waste gas that meets the standards accounts for 5% to 10% of the weight of the NMP waste gas.

Compared with the prior art, the present disclosure has the following advantages:
In the method for recovering NMP in lithium battery production of the present disclosure, first-stage NMP backflow gas obtained after the first-stage NMP gas is adsorbed by a zeolite runner, and second-stage NMP backflow gas obtained after dehydrated light components and rectified light components are condensed flow back to the coating machine after both undergo heat exchange with NMP waste gas, so that heat recovery of NMP waste gas can be achieved, and the heat recovery utilization rate can be improved, and the overall energy consumption of the equipment can be reduced. At the same time, after the NMP waste gas is sequentially subjected to heat exchange treatment, multi-stage condensation treatment, zeolite runner treatment, multi-stage dehydration treatment and distillation treatment, the NMP waste gas can be effectively recovered and purified, and the obtained NMP finished product liquid can be directly used in the coating process, thereby improving the utilization rate of NMP and being conducive to reducing costs and energy conservation and environmental protection.

The present disclosure further proposes a system for recovering NMP in lithium battery production comprising a NMP recovery equipment, a first dehydration and distillation equipment, a second dehydration and distillation equipment, a NMP distillation equipment and a NMP finished product storage tank connected in sequence, and the NMP recovery equipment comprises a heat exchange device, a condensation device, an NMP absorption device and an NMP recovery tank;
the heat exchange device comprises a first heat exchange channel and a second heat exchange channel capable of realizing heat exchange, one end of the first heat exchange channel is connected to the air outlet of the coating machine, and the other end is respectively connected to the air inlet of the condensation device and the NMP recovery tank, one end of the second heat exchange channel is connected to a supply air inlet of the coating machine, and the other end is respectively connected to the gas extraction port of the NMP absorption device, the first dehydration and distillation equipment, the second dehydration and distillation equipment and the NMP distillation equipment;
the condensation device has an exhaust port connected to the NMP absorption device and a drain port connected to the NMP recovery tank, and the NMP absorption device is connected to the first dehydration and distillation equipment through the NMP recovery tank.

Further, the NMP absorption device comprises a zeolite runner connected to the exhaust port, and an absorption tower connected to the desorption end of the zeolite runner, and the absorption tower is connected to the NMP recovery tank.

Further, a raw material preheater is connected between the NMP recovery tank and the first dehydration and distillation equipment, and the raw material preheater is further connected between a third overhead condenser and a third backflow tank in the NMP distillation equipment.

Further, the first dehydration and distillation equipment comprises a first dehydration tower connected to the NMP recovery tank, a first reboiler and a first overhead condenser connected to the first dehydration tower, and a first backflow tank, a first vacuum buffer tank and a first vacuum unit connected in sequence downstream of the first overhead condenser, and a waste water storage tank is connected to the drain port of the first backflow tank.

### DESCRIPTION OF THE DRAWINGS

The drawings constituting a part of the present disclosure are used to provide a further understanding of the present disclosure. The illustrative embodiments of the present disclosure and their descriptions are used to explain the present disclosure and do not constitute an improper limitation on the present disclosure. In the drawings:
Figure 1 is an overall flow chart of a method for recovering NMP in lithium battery production according to an example of the present invention;
Figure 2 is a schematic diagram of the structure of a system for recovering NMP in lithium battery production according to an example of the present invention;
Figure 3 is a schematic diagram of the structure of the NMP recovery equipment according to an example of the present invention;
Figure 4 is a schematic structural diagram of the first dehydration and distillation equipment according to an example of the present invention;
Figure 5 is a schematic structural diagram of the second dehydration and distillation equipment according to an example of the present invention;
Figure 6 is a schematic diagram of the structure of the NMP distillation equipment according to an example of the present invention;

Description of reference numerals:
1. NMP recovery equipment; 2. first dehydration and distillation equipment; 3. second dehydration and distillation equipment; 4. NMP distillation equipment; 5. NMP finished product storage tank; 6. return air pipeline; 7. coating machine; 8. recovery storage tank; 9. residual liquid receiving tank; 10. waste water storage tank;
101. heat exchange device; 102. condensation device; 1021. first-stage condenser; 1022. second-stage condenser; 103. NMP absorption device; 1031. backflow port; 1032. concentration detection unit; 1033. pure water supply device; 104. NMP recovery tank; 105. zeolite runner;
201. first dehydration tower; 202. first reboiler; 203. first overhead condenser; 204. first backflow tank; 205. first vacuum buffer tank; 206. first vacuum unit;
301. second dehydration tower; 302. second reboiler; 303. second overhead condenser; 304. second backflow tank; 205. second vacuum buffer tank; 206. second vacuum unit;
401. distillation tower; 402. third reboiler; 403. third overhead condenser; 404. third backflow tank; 405. third vacuum buffer tank; 406. third vacuum unit; 407. raw material preheater.

### DETAILED DESCRIPTION

It should be noted that, in the absence of conflict, the embodiments and features in the embodiments of the present disclosure may be combined with each other.

In the description of the present disclosure, unless otherwise clearly defined, the terms "installation", "connection", "connection" and "connector" should be understood in a broad sense. For example, it can be a fixed connection, a detachable connection, or an integral connection; it can be a mechanical connection or an electrical connection; it can be a direct connection or an indirect connection through an intermediate medium, or it can be a communication between the two components. For those skilled in the art, the specific meanings of the above terms in the present utility model can be understood in combination with specific circumstances.

The present disclosure will be described in detail below with reference to the accompanying drawings and in conjunction with examples.

The present example relates to a method for recovering NMP in lithium battery production, which can recover the heat of NMP waste gas, improve the heat recovery rate, and reduce the overall energy consumption of the equipment. At the same time, it can further effectively recover and purify NMP waste gas to improve the utilization rate of NMP and reduce costs.

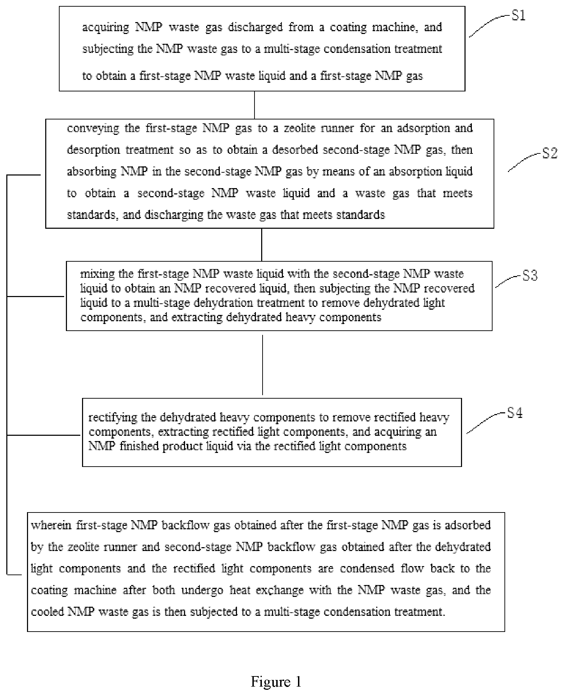

In terms of overall design, as shown in Figure 1, the method for recovering NMP in lithium battery production of this example comprises the following steps:
S1, acquiring NMP waste gas discharged from a coating machine, and subjecting the NMP waste gas to a multi-stage condensation treatment to obtain a first-stage NMP waste liquid and a first-stage NMP gas;
S2, conveying the first-stage NMP gas to a zeolite runner for an adsorption and desorption treatment so as to obtain a desorbed second-stage NMP gas, then absorbing NMP in the second-stage NMP gas by means of an absorption liquid to obtain a second-stage NMP waste liquid and a waste gas that meets standards, and discharging the waste gas that meets standards;
S3, mixing the first-stage NMP waste liquid with the second-stage NMP waste liquid to obtain an NMP recovered liquid, then subjecting the NMP recovered liquid to a multi-stage dehydration treatment to remove dehydrated light components, and extracting dehydrated heavy components; and
S4, rectifying the dehydrated heavy components to remove rectified heavy components, extracting rectified light components, and acquiring an NMP finished product liquid via the rectified light components,
wherein first-stage NMP backflow gas obtained after the first-stage NMP gas is adsorbed by the zeolite runner and second-stage NMP backflow gas obtained after the dehydrated light components and the rectified light components are condensed flow back to the coating machine after both undergo heat exchange with the NMP waste gas, and the cooled NMP waste gas is then subjected to a multi-stage condensation treatment.

Based on the above overall introduction, in this example, as a preferred implementation form, the multi-stage condensation treatment in S1 comprises a first-stage condensation treatment and a second-stage condensation treatment; the cooling medium for the first-stage condensation treatment and the second-stage condensation treatment is cooling water and/or chilled water.

In a specific implementation form, the cooling medium for the first-stage condensation treatment in this example is preferably cooling water, and the cooling medium for the second-stage condensation treatment is preferably chilled water, so as to facilitate the formation of different gradations during the condensation process of the NMP waste gas and improve the condensation efficiency.

Of course, in addition to the above-mentioned implementation forms, the cooling medium for the first-stage condensation treatment and the second-stage condensation treatment in this example can further be set and adjusted accordingly according to actual condensation needs. For example, the cooling medium for the first-stage condensation treatment and the second-stage condensation treatment are both chilled water.

As a preferred embodiment, the method for recovering NMP in lithium battery production of this example further comprises the following steps: mixing the desorbed second-stage NMP gas obtained in S2 with the NMP waste gas in S1 to obtain a mixed gas, and the mixed gas undergoing the multi-stage condensation treatment and the zeolite runner treatment before being absorbed by the absorption liquid.

In this way, the second-stage NMP gas can be purified so that the second-stage NMP gas finally absorbed by the absorption liquid contains a higher concentration of NMP, which is beneficial to improving the absorption efficiency and the efficiency of subsequent purification operations.

Similarly, as a preferred embodiments, the method for recovering NMP in lithium battery production of this example further comprises the following steps: obtaining a third-stage NMP waste liquid formed by first-stage condensation of the NMP waste gas after both the first-stage NMP backflow gas and the second-stage NMP backflow gas are heat-exchanged with the NMP waste gas, and merging the third-stage NMP waste liquid into the NMP recovered liquid.

That is, when the NMP waste gas undergoes heat exchange with the circulating first-stage NMP backflow gas and the second-stage NMP backflow gas, it is initially condensed and NMP purified, and is beneficial to the subsequent two-stage condensation treatment operation, thereby further improving the condensation efficiency of the NMP waste gas.

In this example, as a preferred embodiments, the absorption liquid comprises at least one of the NMP recovered liquid and pure water, so that the NMP recovered liquid extracted from the NMP waste gas can be used as the absorption liquid, which can improve the recovery rate of NMP.

At the same time, as a preferred embodiment, the absorption liquid comprises a first-stage absorption liquid and a second-stage absorption liquid, the NMP concentration in the first-stage absorption liquid is between 1% and 5%, and the NMP concentration in the second-stage absorption liquid is between 30% and 80%, so as to fully absorb the NMP in the second-stage NMP gas.

In a specific embodiment, the second-stage absorption liquid is preferably NMP recovered liquid. In addition to using a solution with an NMP concentration of 1% to 5%, the first-stage absorption liquid may further preferably use pure water to form a better absorption layer and effectively absorb the NMP in the second-stage NMP gas.

In addition, out of consideration for the demand for NMP purification, in this embodiment, as a preferred implementation form, in S3, the multi-stage dehydration treatment comprises a first-stage dehydration treatment and a second-stage dehydration treatment. After the first-stage dehydration treatment, the NMP recovered liquid removes the first-stage light component and extracts the first-stage heavy component, and then the first-stage heavy component is subjected to a second-stage dehydration treatment, and the second-stage light component is removed, and the dehydrated heavy component is extracted, and the first-stage light component and the second-stage light component constitute the dehydrated light component.

Specifically, as a preferred improvement, in this example, the first-stage light component is subjected to a condensation treatment to remove waste water and produce first-stage light component gas, and the second-stage light component is subjected to a condensation treatment to extract second-stage light component liquid and second-stage light component gas containing NMP respectively; the second-stage light component liquid is transported for rectifying, and the second-stage NMP backflow gas comprises the first-stage light component gas and the second-stage light component gas.

In order to improve the heat recovery rate, as a preferred improvement, in this example, the second-stage NMP backflow gas is obtained after condensation treatment of the dehydrated light components and the rectified light components, the method further comprises the following steps: the rectified light component is first condensed and then heat-exchanged with the NMP recovered liquid to obtain the rectified light component gas and the NMP finished product liquid, wherein the second-stage NMP backflow gas comprises the rectified light component gas.

Here, the rectified light components are first condensed and heat exchanged with the NMP recovered liquid, which can further improve the heat recovery rate in the entire process and reduce energy consumption.

It should be noted that, in this example, the second-stage NMP backflow gas is mainly composed of the first-stage light component gas, the second-stage light component gas and rectified light components gas, that is, the gas generated in the multi-stage dehydration treatment and the gas generated in the distillation treatment are all together with the gas adsorbed by the zeolite runner (first-stage NMP backflow gas), after heat exchange with the NMP waste gas, and then re-delivered to the coating machine.

Furthermore, it is understandable that the first-stage NMP backflow gas and the second-stage NMP backflow gas contain a small amount of NMP, which is transported to the coating machine for utilization after participating in heat exchange, which can avoid environmental pollution, improve the utilization rate of NMP, and further reduce costs. At the same time, the heat recovery rate can be further improved by using the rectified light components after condensation treatment and heat exchange with the NMP recovered liquid, thereby reducing overall energy consumption.

In addition, in this example, as another preferred implementation form, the NMP concentration in the NMP recovered liquid subjected to multi-stage dehydration treatment is between 30% and 80%, so as to facilitate the subsequent multi-stage dehydration treatment and distillation treatment and improve the purity of NMP.

That is, when the NMP concentration in the NMP recovered liquid is lower than 30%, it is not temporarily transported to the subsequent process. At this time, the NMP recovered liquid can be used as an absorption liquid to absorb NMP in the second-stage NMP gas until it reaches between 30% and 80%, and then it is subjected to multi-stage dehydration treatment. Similarly, when the NMP concentration in the NMP recovered liquid is higher than 80%, the concentration of NMP in the NMP recovered liquid can be lowered by using pure water as the first-stage absorption liquid.

Of course, in addition to being set between 30% and 80%, the NMP concentration threshold of the NMP recovered liquid in the present embodiment can further be set and adjusted accordingly according to the actual purification requirements. For example, the NMP concentration threshold in the NMP recovered liquid can be specifically set to a specific value such as 40%, 55% or 75%, or can be set to a numerical range such as 40% to 55% or 40% to 75%.

It is worth mentioning that in this example, the temperature of the NMP waste gas discharged from the coating machine is generally around 110°C, the temperature of the first-stage NMP backflow gas and the second-stage NMP backflow gas is generally between 12 and 15°C, and the temperature of the first-stage NMP backflow gas and the second-stage NMP backflow gas after heat exchange is not less than 70°C, so that the heat exchange efficiency reaches about 70%.

At the same time, by using the recovery method of this example, the NMP concentration in the dehydrated heavy component of this example is not less than 99%, the water content is less than 200ppm, and the NMP concentration in the NMP finished product liquid is ensured to be not less than 99.9%, and the overall rectifying efficiency is not less than 98%. Wherein, the NMP concentration in the first-stage heavy component is not less than 98.5%.

In addition, by using the recovery method of this example, the NMP concentration in the first-stage NMP gas is between 150 and 200 ppm, and the waste gas obtained after absorption by the absorption liquid in S2 has an NMP content of no more than 25 mg/m³, which accounts for 5 to 10% of the weight of the NMP waste gas, that is, 90 to 95% of the NMP waste gas participates in the circulation, and the NMP waste gas recovery rate is between 90 and 95%.

The recovery method of this example, through the first-stage NMP gas obtained by adsorbing the first-stage NMP gas through the zeolite runner, and the second-stage NMP backflow gas obtained by condensing the dehydrated light components and the rectified light components, are backflowed to the coating machine after heat exchange with the NMP waste gas, so that the heat recovery of the NMP waste gas can be realized, the heat recovery utilization rate can be improved, and the overall energy consumption of the equipment can be reduced. At the same time, after the NMP waste gas is sequentially subjected to heat exchange treatment, multi-stage condensation treatment, zeolite runner treatment, multi-stage dehydration treatment and distillation treatment, the NMP waste gas can be effectively recovered and purified, and the obtained NMP finished product liquid can be directly used in the coating process, which improves the utilization rate of NMP and is conducive to reducing costs and energy conservation and environmental protection.

The examples of the present disclosure further relate to a NMP recovery system in lithium battery production, which can implement the above-mentioned recovery method, purify NMP from NMP waste gas, fully recover and utilize the heat in the NMP waste gas, reduce the overall energy consumption of the equipment, and has good practicality.

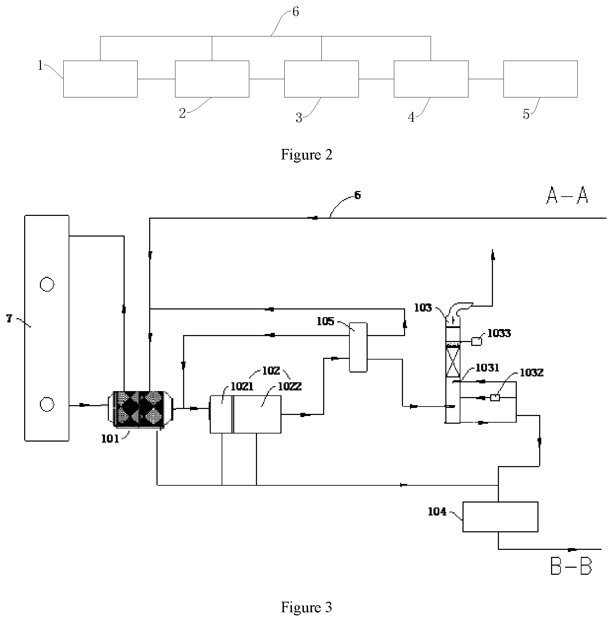

In terms of the overall structure, as shown in figure 2 to figure 6 , the recovery system of this example comprises an NMP recovery equipment 1, a first dehydration and distillation equipment 2, a second dehydration and distillation equipment 3, an NMP distillation equipment 4, and an NMP finished product storage tank 5 connected in sequence, and the NMP recovery equipment 1 comprises a heat exchange device 101, a condensation device 102, an NMP absorption device 103 and an NMP recovery tank 104.

Wherein, the heat exchange device 101 comprises a first heat exchange channel and a second heat exchange channel capable of realizing heat exchange, one end of the first heat exchange channel is connected to the air outlet of the coating machine 7, and the other end is respectively connected to the air inlet of the condensation device 102 and the NMP recovery tank 104, one end of the second heat exchange channel is connected to a supply air inlet of the coating machine, and the other end is respectively connected to the gas extraction port of the NMP absorption device 103, the first dehydration and distillation equipment 2, the second dehydration and distillation equipment 3 and the NMP distillation equipment 4.

The condensation device 102 has an exhaust port connected to the NMP absorption device 103 and a drain port connected to the NMP recovery tank 104, and the NMP absorption device 103 is connected to the first dehydration and distillation equipment 2 through the NMP recovery tank 104.

Specifically, as a preferred implementation form, in this example, as shown in figure 3, the NMP absorption device 103 comprises a zeolite runner 105 connected to the exhaust port, and an absorption tower connected to the desorption end of the zeolite runner 105, and the absorption tower is connected to the NMP recovery tank 104.

In this example, the desorption end of the zeolite runner 105 is connected to the absorption tower and the condensation device 102, that is, when the NMP concentration in the desorbed gas does not meet the standard, the gas can be condensed and processed by the zeolite runner 105 to achieve the purpose of purification. The adsorption end of the zeolite runner 105 is connected to the heat exchange device 101, so that the adsorbed gas is used as circulating cold air and transported to the coating machine 7 after being heated.

Furthermore, it is worth mentioning that the absorption tower of the present example comprises an upper tower and a lower tower, the desorption end of the zeolite runner 105 is connected to the lower tower, and the lower tower is connected to the NMP recovery tank 104 through the backflow port 1031, and the NMP solution in the NMP recovery tank 104 can be used as an absorption liquid to absorb the gas containing NMP entering the lower tower, and when the NMP concentration in the NMP solution in the lower tower reaches 30% to 80%, the solution can be transported to the NMP recovery tank 104.

In order to detect the NMP concentration in the lower tower solution, in this example, as a preferred implementation form, a detection pipeline is further provided between the lower tower and the NMP recovery tank 104, and a concentration detection unit 1032 for detecting the NMP concentration is provided on the detection pipeline, and the concentration detection unit 1032 can adopt a liquid concentration sensor or a liquid concentration detector commonly used by those skilled in the art.

Further, as a preferred implementation form, the upper tower of this embodiment is further connected to a pure water supply device 1033, so as to facilitate the use of pure water as the absorption liquid of NMP, and cooperate with the lower tower to effectively absorb NMP in the gas after desorption.

In this example, in order to ensure the condensation effect of the condensation device 102, as shown in figure 3, as a preferred implementation form, the condensation device 102 comprises a first-stage condenser 1021 and a second-stage condenser 1022 sequentially connected between the heat exchange device 101 and the zeolite runner 105. During the specific implementation, the first-stage condenser 1021 preferably uses cooling water as the cooling medium, and the second-stage condenser 1022 preferably uses chilled water as the cooling medium to form a grading condensation form to improve the condensation effect.

At the same time, in this embodiment, as a preferred implementation form, a raw material preheater 407 is connected between the NMP recovery tank 104 and the first dehydration and distillation equipment 2, and the raw material preheater 407 is further connected between a third overhead condenser and a third backflow tank 404 in the NMP distillation equipment 4, so that the heat in the rectifying can be recycled and utilized, and the energy consumption of the equipment is further reduced.

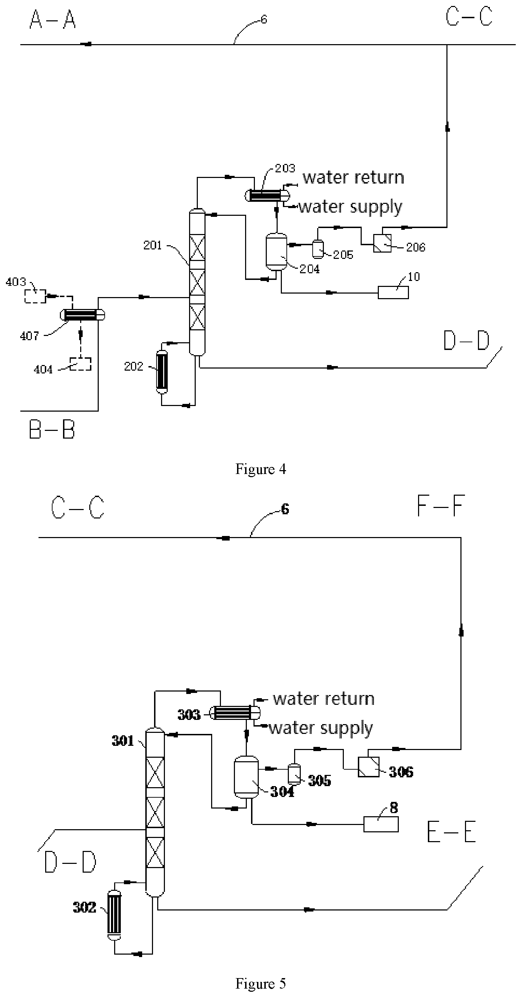

In addition, still as a preferred implementation form, in this example, as shown in figure 4, the first dehydration and distillation equipment 2 comprises a first dehydration tower 201 connected to the NMP recovery tank 104, a first reboiler 202 and a first overhead condenser 203 connected to the first dehydration tower 201, and a first backflow tank 204, a first vacuum buffer tank 205 and a first vacuum unit 206 connected in sequence downstream of the first overhead condenser 203, and a waste water storage tank 10 is connected to the drain port of the first backflow tank 204.

Secondly, referring to figure 5, in the present example, the second dehydration and distillation equipment 3 comprises a second dehydration tower 301 connected to the first dehydration tower 201, a second reboiler 302 and a second overhead condenser 303 connected to the second dehydration tower 301, and a second backflow tank 304, a second vacuum buffer tank 205 and a second vacuum unit 206 which are sequentially connected to the downstream of the second overhead condenser 303, and a recovery storage tank 8 is further connected to the discharge port of the second backflow tank 304.

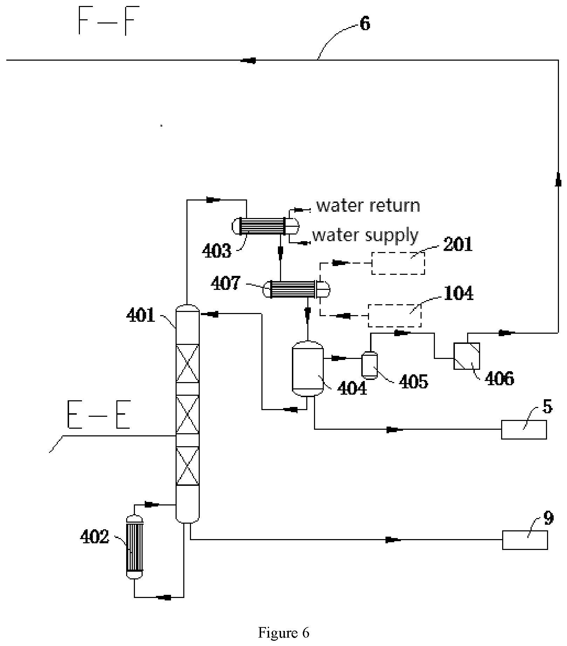

At the same time, referring to figure 6, the NMP distillation equipment 4 of this example comprises a distillation tower 401 connected to the second dehydration tower 301, a third reboiler 402 and a third overhead condenser 403 connected to the distillation tower 401, and a third backflow tank 404, a third vacuum buffer tank 405 and a third vacuum unit 406 connected in sequence downstream of the third overhead condenser 403, and a residual liquid receiving tank 9 is further connected to the discharge port of the third backflow tank 404, and the above-mentioned raw material preheater 407 is further connected between the third overhead condenser 403 and the third backflow tank 404, and as a further improved form, the distillation tower 401 can further be connected to the recovery tank 8 to facilitate the purification of the liquid NMP in the recovery storage tank 8.

It should be noted that the heat exchange device 101 of this example is further connected to the NMP recovery tank 104, and it can adopt a gas-to-gas heat exchanger commonly used by those skilled in the art. In this embodiment, the adsorption end of the first vacuum unit 206, the second vacuum unit 206, the third vacuum unit 406 and the zeolite runner 105 are all connected to the second heat exchange channel through the return air pipeline 6 to facilitate the recovery of heat in the NMP waste gas discharged by the coating machine 7.

In addition, the structures not mentioned in the NMP recovery equipment 1, the first dehydration and distillation equipment 2, the second dehydration and distillation equipment 3 and the NMP distillation equipment 4 in this example can refer to the related equipment products commonly used by those skilled in the art, such as the first overhead condenser 203, the second overhead condenser 303 and the third overhead condenser 403, which are all provided with a water supply end and a water return end for circulating cooling water, which will not be described in detail here.

The recovery system of this embodiment can realize the recovery and purification of NMP waste gas through the cooperation of NMP recovery equipment 1, first dehydration and distillation equipment 2, second dehydration and distillation equipment 3, NMP distillation equipment 4 and NMP finished product storage tank 5, and the obtained NMP finished product liquid can be directly applied to the coating process, which improves the utilization rate of NMP, is conducive to reducing costs and energy conservation and environmental protection. At the same time, a heat exchange device 101 is provided in the NMP recovery equipment 1, which is conducive to the recovery and utilization of heat of NMP waste gas, improves the heat recovery and utilization rate of the equipment, reduces the overall energy consumption of the equipment, and has good practicality.

In addition, in order to facilitate understanding of the implementation process of the NMP recovery method in lithium battery production, the present invention further describes the recovery method in detail in combination with the recovery system, as follows:

### (1) Process of purifying NMP:

First, the NMP waste gas discharged from the coating machine 7 is preliminarily condensed by the heat exchange device 101, and the NMP waste gas after cooling is obtained and transported to the condensation device 102 for two-stage condensation treatment to obtain a first-stage NMP waste liquid and a first-stage NMP gas. Subsequently, the first-stage NMP waste liquid is transported to the NMP recovery tank 104, and the first-stage NMP gas is transported to the zeolite runner 105 and the absorption tower in turn, wherein the second-stage NMP gas after desorption from the zeolite runner 105 is transported to the absorption tower, and the absorption liquid is used to absorb the NMP in the second-stage NMP gas, and the obtained second-stage NMP waste liquid is further transported to the NMP recovery tank 104.

At the same time, it should be noted that the NMP waste gas discharged from the coating machine 7 will be initially condensed to form a third-stage NMP waste liquid when passing through the heat exchange device 101, and the third-stage NMP waste liquid is further transported to the NMP recovery tank 104. If the NMP concentration of the NMP recovered liquid in the NMP recovery tank 104 is lower than or higher than the threshold value, the NMP recovered liquid can be used as the lower tower absorption liquid and pure water as the upper tower absorption liquid to adjust the NMP recovered liquid until the NMP concentration reaches the threshold requirement.

Secondly, the recovered liquid that meets the threshold requirement will be transported to the first dehydration and distillation equipment 2 for dehydration and separation treatment, to remove the first-stage light component and produce the first-stage heavy component, and then the first-stage heavy component will be transported to the second dehydration and distillation equipment 3 for secondary dehydration and separation treatment, to remove the second-stage light component and produce the dehydrated heavy component, and then the dehydrated heavy component will be transported to the NMP distillation equipment 4 for distillation and separation treatment, and the condensate in the produced rectified light component is the NMP finished product liquid.

Finally, the NMP finished product liquid is transported to the NMP finished product storage tank 5 for coating operation, thereby completing the NMP purification process. It is worth mentioning that after the first-stage light component is condensed by the first overhead condenser 203, the separated liquid is transported to the wastewater storage tank 10 as the overhead wastewater, and discharged after the wastewater treatment, and after the second-stage light component is condensed by the second overhead condenser 303, the separated liquid can be transported to the distillation tower 401 together with the dehydrated heavy component for distillation and separation treatment, and the removed rectified heavy component is transported to the residual liquid receiving tank 9 as the residual liquid.

### (2) Process of recovering heat from NMP waste gas:

In the above (1) NMP purification process, the first-stage NMP gas is adsorbed by the zeolite runner 105 to obtain the first-stage NMP backflow gas. The gas of the first-stage light component treated by the first overhead condenser 203, the first backflow tank 204, the first vacuum buffer tank 205 and the first vacuum unit 206, the gas of the second-stage light component treated by the second overhead condenser 303, the second backflow tank 304, the second vacuum buffer tank 205 and the second vacuum unit 206, and the gas of the rectification light component treated by the third overhead condenser 403, the third backflow tank 404, the third vacuum buffer tank 405 and the third vacuum unit 406 are merged to form the second-stage NMP backflow gas.

Secondly, the first-stage NMP backflow gas and the second-stage NMP backflow gas are backflowed to the coating machine 7 after heat exchange with the NMP waste gas, so as to effectively recover and utilize the heat in the NMP waste gas, thereby realizing heat recovery of the NMP waste gas.

It is further necessary to mention that, in the process of the rectified light component flowing into the third backflow tank 404 after being processed by the third overhead condenser 403, the rectified light component is further processed by the raw material preheater 407, which can heat the NMP recovered liquid to improve the dehydration and separation effect of the first dehydration tower 201, so as to improve the heat recovery rate of the equipment and reduce the overall energy consumption of the equipment. In addition, in this embodiment, the gas treated by the absorption tower is discharged as a waste gas that meets the standards.

The above description is only a preferred example of the present disclosure and is not intended to limit the present disclosure. Any amendments, equivalent substitutions, improvements, etc. made within the spirit and principles of the present disclosure should be included in the protection scope of the present disclosure.

## Claims

1. A method for recovering NMP in lithium battery production, wherein the method comprises the following steps:
S1, acquiring NMP waste gas discharged from a coating machine, and subjecting the NMP waste gas to a multi-stage condensation treatment to obtain a first-stage NMP waste liquid and a first-stage NMP gas;
S2, conveying the first-stage NMP gas to a zeolite runner for an adsorption and desorption treatment so as to obtain a desorbed second-stage NMP gas, then absorbing NMP in the second-stage NMP gas by means of an absorption liquid to obtain a second-stage NMP waste liquid and a waste gas that meets standards, and discharging the waste gas that meets standards;
S3, mixing the first-stage NMP waste liquid with the second-stage NMP waste liquid to obtain an NMP recovered liquid, then subjecting the NMP recovered liquid to a multi-stage dehydration treatment to remove dehydrated light components, and extracting dehydrated heavy components;
and
S4, rectifying the dehydrated heavy components to remove rectified heavy components, extracting rectified light components, and acquiring an NMP finished product liquid via the rectified light components,
wherein first-stage NMP backflow gas obtained after the first-stage NMP gas is adsorbed by the zeolite runner and second-stage NMP backflow gas obtained after the dehydrated light components and the rectified light components are condensed flow back to the coating machine after both undergo heat exchange with the NMP waste gas, and the cooled NMP waste gas is then subjected to a multi-stage condensation treatment.

2. The method for recovering NMP in lithium battery production according to claim 1, wherein
the multi-stage condensation treatment in S1 comprises a first-stage condensation treatment and a second-stage condensation treatment;
the cooling medium for the first-stage condensation treatment and the second-stage condensation treatment is cooling water and/or chilled water.

3. The method for recovering NMP in lithium battery production according to claim 1, wherein the method further comprises the following steps:
mixing the desorbed second-stage NMP gas obtained in S2 with the NMP waste gas in S1 to obtain a mixed gas, and the mixed gas undergoing the multi-stage condensation treatment and the zeolite runner treatment before being absorbed by the absorption liquid.

4. The method for recovering NMP in lithium battery production according to claim 1, wherein the method further comprises the following steps:
obtaining a third-stage NMP waste liquid formed by first-stage condensation of the NMP waste gas after both the first-stage NMP backflow gas and the second-stage NMP backflow gas are heat-exchanged with the NMP waste gas, and merging the third-stage NMP waste liquid into the NMP recovered liquid.

5. The method for recovering NMP in lithium battery production according to claim 1, wherein the absorption liquid comprises at least one of the NMP recovered liquid and pure water.

6. The method for recovering NMP in lithium battery production according to claim 1, wherein
the absorption liquid comprises a first-stage absorption liquid and a second-stage absorption liquid, the NMP concentration in the first-stage absorption liquid is between 1% and 5%, and the NMP concentration in the second-stage absorption liquid is between 30% and 80%.

7. The method for recovering NMP in lithium battery production according to claim 1, wherein
in S3, the multi-stage dehydration treatment comprises a first-stage dehydration treatment and a second-stage dehydration treatment;
after the NMP recovered liquid is subjected to the first-stage dehydration treatment, the first-stage light component is removed and the first-stage heavy component is produced, subsequently, the first-stage heavy component is subjected to the second-stage dehydration treatment and the second-stage light component is removed to produce the dehydrated heavy component, and the first-stage light component and the second-stage light component constitute the dehydrated light component.

8. The method for recovering NMP in lithium battery production according to claim 7, wherein
the first-stage light component is subjected to a condensation treatment to remove waste water and produce first-stage light component gas, and the second-stage light component is subjected to a condensation treatment to extract second-stage light component liquid and second-stage light component gas containing NMP respectively;
the second-stage light component liquid is transported for rectifying, and the second-stage NMP backflow gas comprises the first-stage light component gas and the second-stage light component gas.

9. The method for recovering NMP in lithium battery production according to claim 1 wherein when the second-stage NMP backflow gas is obtained after condensation treatment of the dehydrated light components and the rectified light components, the method further comprises the following steps:
the rectified light component is first condensed and then heat-exchanged with the NMP recovered liquid to obtain the rectified light component gas and the NMP finished product liquid, wherein the second-stage NMP backflow gas comprises the rectified light component gas.

10. The method for recovering NMP in lithium battery production according to claim 1, wherein the NMP concentration in the NMP recovered liquid subjected to the multi-stage dehydration treatment is between 30% and 80%.

11. The method for recovering NMP in lithium battery production according to any one of claims 1 to 10, wherein
the NMP concentration in the first-stage NMP gas is between 150 and 200 ppm; and/or,
the NMP content of the waste gas that meets the standards is not higher than 25 mg/m³, and the waste gas that meets the standards accounts for 5% to 10% of the weight of the NMP waste gas.

12. A system for recovering NMP in lithium battery production, wherein
the system comprises a NMP recovery equipment, a first dehydration and distillation equipment, a second dehydration and distillation equipment, a NMP distillation equipment and a NMP finished product storage tank connected in sequence, and the NMP recovery equipment comprises a heat exchange device, a condensation device, an NMP absorption device and an NMP recovery tank;
the heat exchange device comprises a first heat exchange channel and a second heat exchange channel capable of realizing heat exchange, one end of the first heat exchange channel is connected to the air outlet of the coating machine, and the other end is respectively connected to the air inlet of the condensation device and the NMP recovery tank, one end of the second heat exchange channel is connected to a supply air inlet of the coating machine, and the other end is respectively connected to the gas extraction port of the NMP absorption device, the first dehydration and distillation equipment, the second dehydration and distillation equipment and the NMP distillation equipment;
the condensation device has an exhaust port connected to the NMP absorption device and a drain port connected to the NMP recovery tank, and the NMP absorption device is connected to the first dehydration and distillation equipment through the NMP recovery tank.

13. The system for recovering NMP in lithium battery production according to claim 12, wherein the NMP absorption device comprises a zeolite runner connected to the exhaust port, and an absorption tower connected to the desorption end of the zeolite runner, and the absorption tower is connected to the NMP recovery tank.

14. The system for recovering NMP in lithium battery production according to claim 12, wherein a raw material preheater is connected between the NMP recovery tank and the first dehydration and distillation equipment, and the raw material preheater is further connected between a third overhead condenser and a third backflow tank in the NMP distillation equipment.

15. The system for recovering NMP in lithium battery production according to claim 12, wherein the first dehydration and distillation equipment comprises a first dehydration tower connected to the NMP recovery tank, a first reboiler and a first overhead condenser connected to the first dehydration tower, and a first backflow tank, a first vacuum buffer tank and a first vacuum unit connected in sequence downstream of the first overhead condenser, and a waste water storage tank is connected to the drain port of the first backflow tank.
